# EUROPEAN PATENT SPECIFICATION

(11) **EP 4 202 656 B1**
(45) Date of publication and mention of the grant of the patent: **06.11.2024**
(21) Application number: 22206859.5
(22) Date of filing: 11.11.2022
(51) Int. Cl.: G06F 9/30

(54) **RANDOM DATA USAGE**
ZUFALLSDATENVERWENDUNG
UTILISATION DE DONNÉES ALÉATOIRES

(30) Priority: 23.12.2021 US 202117560658
(43) Date of publication of application: 28.06.2023
(73) Proprietor: INTEL Corporation, Santa Clara, CA 95054 (US)
(72) Inventor: Ould-Ahmed-Vall, Elmoustapha, Chandler, 85226 (US)
(74) Representative: Goddar, Heinz J.

(56) References cited:
- EP-A1- 3 432 137
- WO-A1-2013/101101
- WO-A1-2021/074865
- US-A1- 2003 149 863

## Description

### BACKGROUND

The invention relates to a random number generation method and apparatus.

Computers including phones, servers, and personal computers all utilize memory to store data. This memory includes random access memory, cache memory, non-volatile memory, etc., stores data to be utilized during program execution.

WO 2021/074865 A1 discloses: Techniques in wavelet filtering for advanced deep learning provide improvements in one or more of accuracy, performance, and energy efficiency. An array of processing elements comprising a portion of a neural network accelerator performs flow-based computations on wavelets of data. Each processing element comprises a compute element to execute programmed instructions using the data and a router to route the wavelets in accordance with virtual channel specifiers. Each processing element is enabled to perform local filtering of wavelets received at the processing element, selectively, conditionally, and/or optionally discarding zero or more of the received wavelets, thereby preventing further processing of the discarded wavelets. The wavelet filtering is performed by one or more configurable wavelet filters operable in various modes, such as counter, sparse, and range modes.

US 2003/149863 A1 discloses a microprocessor that includes a random number generator (RNG) and an instruction for storing random data bytes generated by the generator. The RNG includes multiple buffers for buffering the random bytes and counters associated with each buffer for keeping a count of the number of bytes in each buffer. The instruction specifies a destination for the bytes to be stored to. In one embodiment, the number of bytes written to memory is variable and is the number of bytes available when the instruction is executed; in another, the instruction specifies the number. If variable, the instruction atomically stores a count specifying the number of valid bytes actually stored. In one embodiment the destination is a location in system memory. The count may be stored to memory with the bytes; or the count may be stored to a user-visible register. An REP prefix may be used.

WO 2013/101101 A1 discloses: A hardware-based digital random number generator is provided. In one embodiment, a processor includes a digital random number generator (DRNG) to condition entropy data provided by an entropy source, to generate a plurality of deterministic random bit (DRB) strings, and to generate a plurality of nondeterministic random bit (NRB) strings, and an execution unit coupled to the DRNG, in response to a first instruction to read a seed value, to retrieve one of the NRB strings from the DRNG and to store the NRB string in a destination register specified by the first instruction.

EP 3 432 137 A1 discloses: The present application discloses a random number generation and retrieval method and device. The generation method includes: generating a random number array, where the random number array includes N storage units, each of the storage units stores a random number, and N is a positive integer; performing random shuffling on the storage units in the random number array; and receiving a random number retrieval instruction, and reading, from a corresponding storage unit in the random number array based on the random number retrieval instruction, a random number stored in the storage unit. In the implementations of the present application, a plurality of random numbers obtained in a relatively short unit time have a low repetition rate, to achieve balanced distribution. Therefore, the random number generation method and device in the present application can achieve relatively high randomness.

### BRIEF DESCRIPTION OF DRAWINGS

Various examples in accordance with the present disclosure will be described with reference to the drawings, in which:
**FIG. 1** illustrates examples of aspects of a processor and/or system on a chip involved in a prefetch of random data for one or more cachelines and/or use implicitly referenced random data during instruction execution.
**FIG. 2** illustrates examples of core and caches in greater detail.
**FIG. 3** illustrates examples usage of a random number by an execution cluster.
**FIG. 4** illustrates examples of a method for using random numbers.
**FIG. 5** illustrates examples of a method to process a PREFETCHRDM instruction.
**FIG. 6** illustrates examples of a method to process a {OP}WRND instruction.
**FIG. 7** illustrates examples of hardware to process an instruction such as a random data cache prefetch (PREFETCHRDM) instruction and/or a use random data in an operation ({OP}WRND) instruction.
**FIG. 8** illustrates examples of an exemplary system.
**FIG. 9** illustrates a block diagram of examples of a processor that may have more than one core, may have an integrated memory controller, and may have integrated graphics.
**FIG. 10(A)** is a block diagram illustrating both an exemplary in-order pipeline and an exemplary register renaming, out-of-order issue/execution pipeline according to examples.
**FIG. 10(B)** is a block diagram illustrating both an exemplary example of an in-order architecture core and an exemplary register renaming, out-of-order issue/execution architecture core to be included in a processor according to examples.
**FIG. 11** illustrates examples of execution unit(s) circuitry, such as execution unit(s) circuitry of FIG. 10(B).
**FIG. 12** is a block diagram of a register architecture according to some examples.
**FIG. 13** illustrates examples of an instruction format.
**FIG. 14** illustrates examples of an addressing field.
**FIG. 15** illustrates examples of a first prefix.
**FIGS. 16(A)****-(D)** illustrate examples of how the R, X, and B fields of the first prefix 1301(A) are used.
**FIGS. 17(A)****-(B)** illustrate examples of a second prefix.
**FIG. 18** illustrates examples of a third prefix.
**FIG. 19** illustrates a block diagram contrasting the use of a software instruction converter to convert binary instructions in a source instruction set to binary instructions in a target instruction set according to examples.

### DETAILED DESCRIPTION

The present disclosure relates to methods, apparatus, systems, and non-transitory computer-readable storage media for writing random data to one or more cachelines and/or using random data in instruction execution. According to some examples, an instruction, which when executed, causes circuitry (such as memory access circuitry or execution circuitry) to write random data into one or more cache lines. According to some examples, an instruction, which when executed, causes circuitry (such as execution circuitry) to use random data as an operand without having to identify a particular location for a source of that random data (e.g., without having to identify a particular register or memory location).

There are times that a programmer would like for a particular subset of memory (e.g., a cacheline or cache level) to be initialized to a particular value or type of value. For example, in training a machine learning algorithm, there are times when a random value may be used. Instead of having to generate random value with an instruction, and then use the generated random value in a different instruction, it would be beneficial to have a particular subset of memory that is accessible that already has random value available. Additionally, there are times when a random value is desired such as for performing inference with a machine learning model or training of a machine learning algorithm.

Current cache prefetch instructions fetch a cache line of data from memory at a defined memory location (such as a byte memory location). Whatever data is stored in that location is retrieved. There are no instructions which allow for random data to be prefetched. Additionally, while there are instructions that use implicit operands, there are no known instructions that have an implicit operand which is a random data value.

Detailed below are examples of systems, apparatuses, etc. that allow for the prefetch of cachelines of random data and/or perform an operation with implicitly identified random data. This allows for a cacheline to be primed for a future task or tasks without the need for expending the extra time and energy of first generating a random data value, storing that data value in a particular memory location, and then prefetching that line from the particular memory location, or to use random data without having to identify a particular storage location. In some examples, the use of either of these instructions is particularly useful for training a machine learning algorithm or fine tuning a machine learning model. For example, in a second plus round of calculations the use of random values is a common technique.

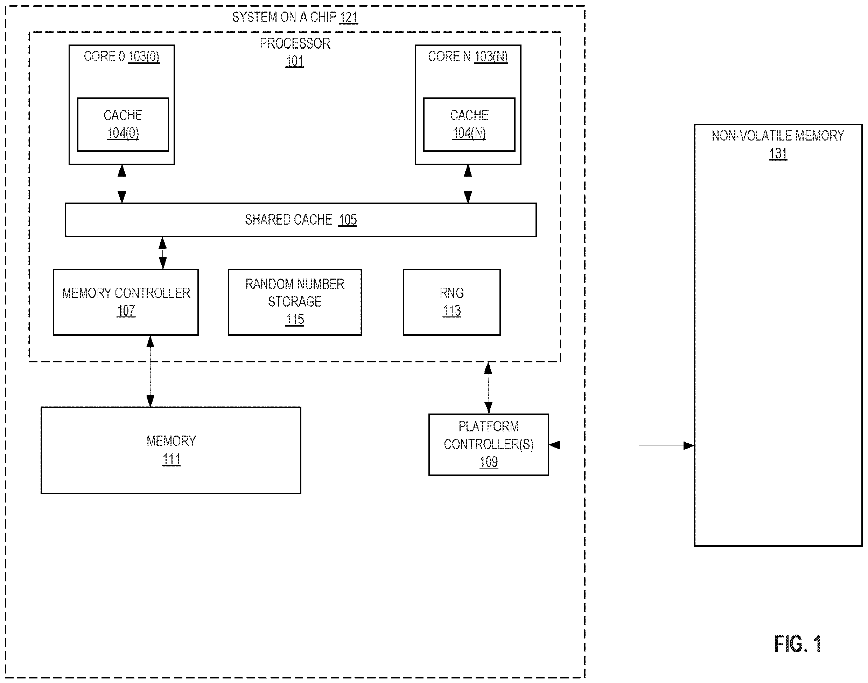

**FIG. 1** illustrates examples of aspects of a processor and/or system on a chip involved in a prefetch of random data for one or more cachelines and/or use implicitly referenced random data during instruction execution. A plurality of cores 103(0)-INV03(N) include instruction processing resources (an exemplary pipeline is detailed later) which include the use of local caches 104(0)-104(N). In some examples, at least one of the cores is a graphics processing unit (GPU), accelerator processing unit (APU), etc. The cores 103(0)-INV03(N) also utilize a shared cache 105. The shared cache 105 may be a last level cache (LLC) such as L3, L4, etc. cache. As will be detailed below, the processing of a single instruction of a first instruction set causes one or more cachelines in the local caches 104(0)-104(N) or shared cache 105 to store random data. In some examples, the single instruction is translated to one or more instructions of a second, different instruction set that causes one or more cachelines in the local caches 104(0)-104(N) or shared cache 105 to store random data.

A memory controller 107 is used to access to main memory 111 (e.g., random access memory (RAM)). In particular, the memory controller 107 controls reads and writes to main memory 111. In some examples, the memory controller 107 is integrated within a processor 101. In other examples, the memory controller 107 is external to a processor. Main memory 111 includes a plurality of data blocks that store data.

A platform controller 109 is used to access to non-volatile memory 131 (e.g., hard disk, second level memory (2LM), etc.). In particular, the platform controller 109 controls reads and writes to non-volatile memory 131. Non-volatile memory 131 includes a plurality of data blocks that store data.

A random number generator (RNG) circuitry 113 generates random number to be stored. Note that this circuitry is a part of one or more cores in some examples.

In some examples, certain aspects are integrated as part of a processor 101 and/or system on a chip 121.

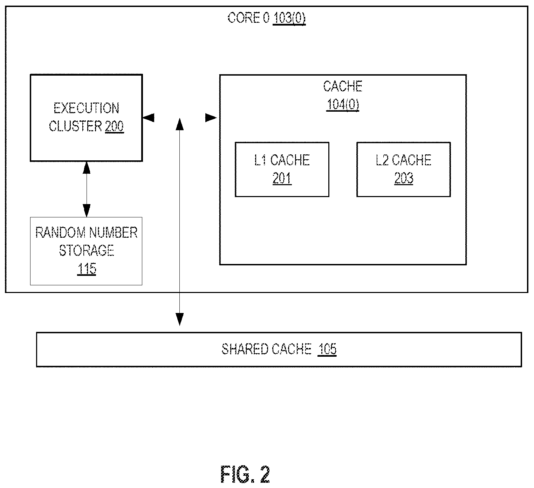

**FIG. 2** illustrates examples of core and caches in greater detail. As shown, a core 103(0) at least includes an execution cluster 200 which executes instructions. This execution cluster 200 may include execution unit(s) circuitry (ALU, etc.) and/or memory access circuitry.

As shown, the random number storage 115 is close to the execution cluster 200. In some examples, the random number storage 115 is a part of the execution cluster. The random number storage 115 is implemented with dedicated registers in some examples. In other examples, the random number storage 115 is implemented as a scratch pad. Additionally, in some examples, support for such register usage is indicated via a CPUID leaf.

The execution cluster 200, upon the execution of an instruction (detailed below), pulls one or more random numbers from the random number storage 115 and for one or more cache lines of the L1 cache 201, L2 cache 203, and/or shared cache 105. In some examples, the data is actually stored. In other examples, it is made available for cache use. The level of cache to store the line(s) is indicated by the opcode of the instruction in some examples. In other examples, this encoded by bits 3 through 5 of the mod R/M byte (detailed later). The exemplary levels may include as PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA - prefetch into a non-temporal cache structure.

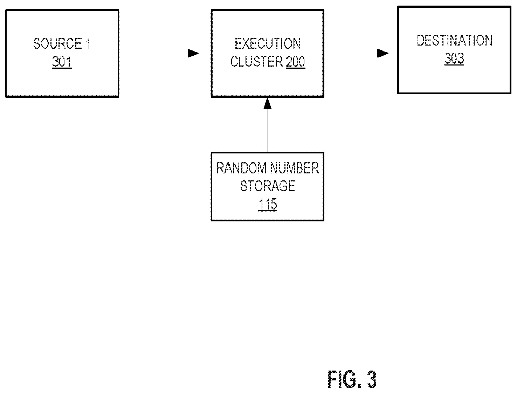

**FIG.** 3 illustrates examples usage of a random number by an execution cluster. As shown, the execution cluster 200, during execution of an instruction, receives data from a first source (source 1 301) such as a register or memory location and from random number storage 115 and stores the result in destination 303 such as a register or memory location. In previous architectures, to use a random number one would first have to generate and store the random number using a first instruction and then execute a second instruction that referenced that stored random number.

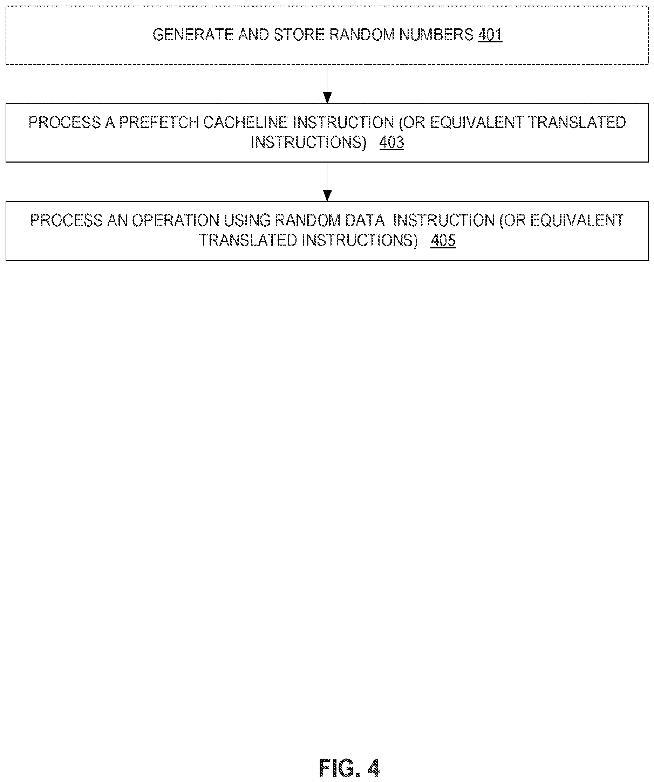

**FIG. 4** illustrates examples of a method for using random numbers. A plurality of random numbers is generated and stored at 401. This occurs during boot, during downtime within a processor, etc. This generation allows for the initialization to random numbers have little or no time penalty. In some examples, the random numbers are stored in, or near, the memory to be initialized.

In some examples, a PREFETCHRDM instruction (or equivalent translated instructions) is processed to prefetch previously generated random data for one or more lines of cache at 403. This instruction is detailed below.

In some examples, a {OP}WRND instruction (or equivalent translated instructions) is processed to perform an operation using implicitly addressed random data at 405. This instruction is detailed below.

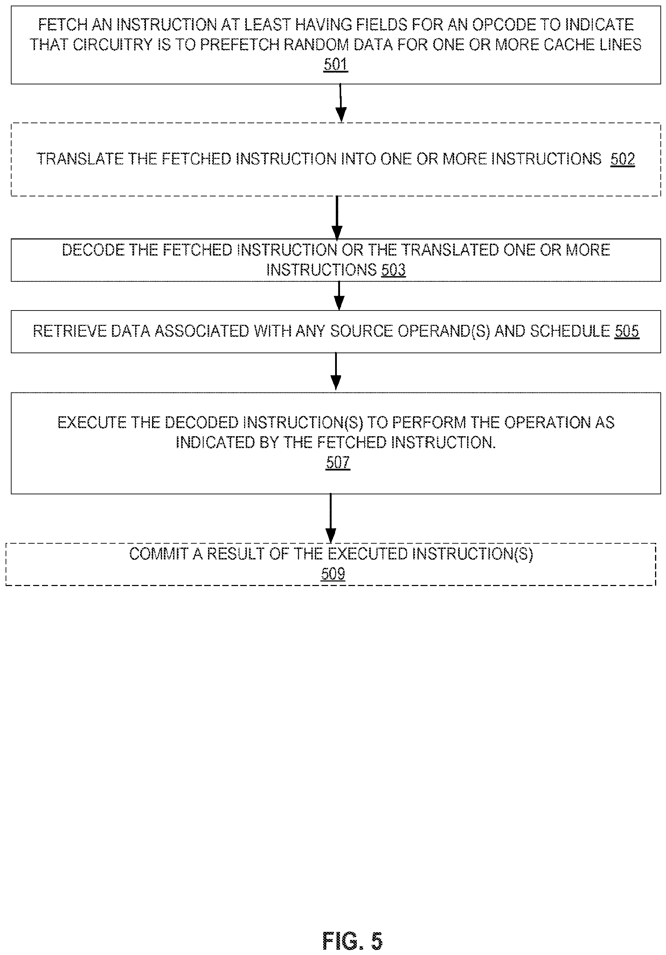

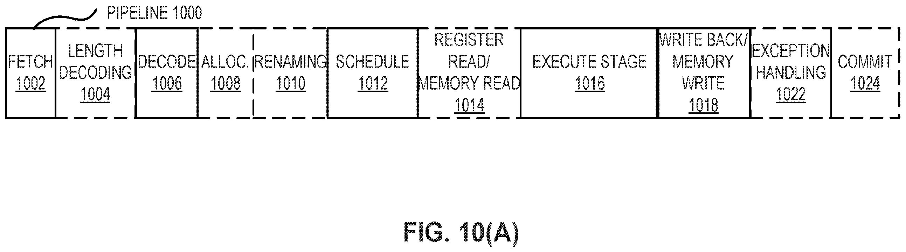

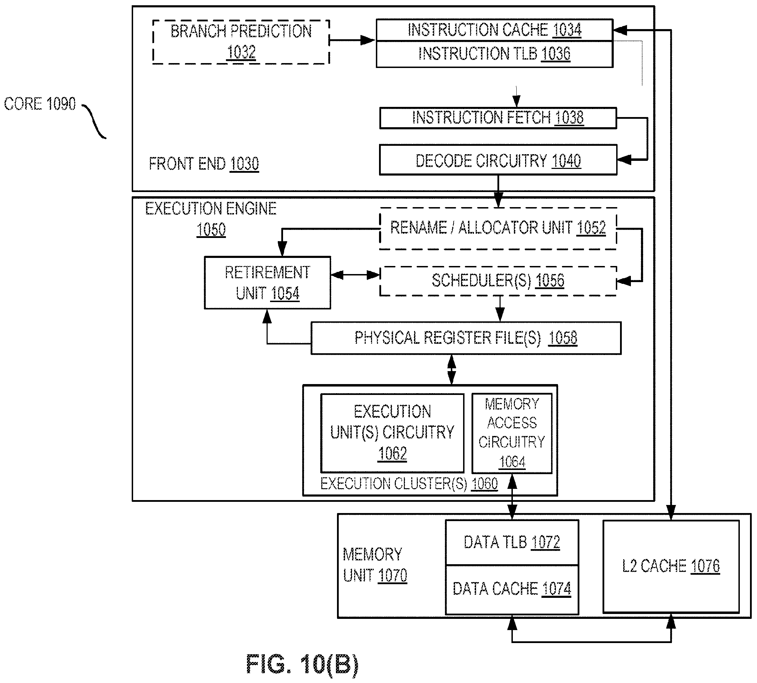

**FIG. 5** illustrates examples of a method to process a PREFETCHRDM instruction. In some examples, a processor core as shown in FIG. 10(B), a pipeline as detailed below, etc. performs this method. In other examples, a binary translation layer performs aspects of the method, and a processor core performs other aspects of the method.

At 501, a single PREFETCHRDM instruction is fetched. The PREFETCHRDM instruction may come in many different forms depending on the implementation.

An example of a format for a memory initialization instruction is PREFETCHRDM SRC. In some examples, PREFETCHRDM is the opcode mnemonic of the instruction. The PREFETCHRDM instruction, when executed, causes one or more cachelines of random data to be prefetched from random data storage to be used in one or more levels of cache. SRC represents one or more fields that indicate what level(s) of cache to prefetch for. In some examples, this is encoded by bits 3 through 5 of the mod R/M byte (detailed later). The exemplary levels may include as PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA - prefetch into a non-temporal cache structure.

An example of a format for a memory initialization instruction is PREFETCHRDM{LEVEL}. In some examples, PREFETCHRDM{LEVEL} is the opcode mnemonic of the instruction. The PREFETCHRDM{LEVEL} instruction, when executed, causes one or more cache lines of random data to be prefetched from random data storage to be used in one or more levels of cache. {LEVEL} represents exemplary levels to prefetch for such as, for example, PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA - prefetch into a non-temporal cache structure.

An example of a format for a memory initialization instruction is PREFETCHRDM SRC1, SRC2. In some examples, PREFETCHRDM is the opcode mnemonic of the instruction. The PREFETCHRDM instruction, when executed, causes one or more cachelines of random data to be prefetched from random data storage to be used in one or more levels of cache. SRC1 represents one or more fields of the instruction that indicate what level(s) of cache to prefetch for. In some examples, this is encoded by bits 3 through 5 of the mod R/M byte (detailed later). The exemplary levels may include as PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA-prefetch into a non-temporal cache structure. SRC2 represents one or more fields of that instruction that indicate what a storage location that is to store a number of cachelines to prefetch.

An example of a format for a memory initialization instruction is PREFETCHRDM SRC1, IMM. In some examples, PREFETCHRDM is the opcode mnemonic of the instruction. The PREFETCHRDM instruction, when executed, causes one or more cachelines of random data to be prefetched from random data storage to be used in one or more levels of cache. SRC1 represents one or more fields of the instruction that indicate what level(s) of cache to prefetch for. In some examples, this is encoded by bits 3 through 5 of the mod R/M byte (detailed later). The exemplary levels may include as PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA-prefetch into a non-temporal cache structure. IMM represents an immediate field of the instruction that encodes a number of cachelines to prefetch.

An example of a format for a memory initialization instruction is PREFETCHRDM{LEVEL} SRC1. In some examples, PREFETCHRDM{LEVEL} is the opcode mnemonic of the instruction. The PREFETCHRDM{LEVEL} instruction, when executed, causes one or more cache lines of random data to be prefetched from random data storage to be used in one or more levels of cache. {LEVEL} represents exemplary levels to prefetch for such as, for example, PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA - prefetch into a non-temporal cache structure. SRC1 represents one or more fields of the instruction that indicate what a storage location that is to store a number of cachelines to prefetch.

An example of a format for a memory initialization instruction is PREFETCHRDM{LEVEL} IMM. In some examples, PREFETCHRDM{LEVEL} is the opcode mnemonic of the instruction. The PREFETCHRDM{LEVEL} instruction, when executed, causes one or more cachelines of random data to be prefetched from random data storage to be used in one or more levels of cache. {LEVEL} represents exemplary levels to prefetch for such as, for example, PF0 - prefetch data for all levels of the cache hierarchy, PF1 - prefetch data for level 2 cache (e.g., L2 cache 203) and higher, PF2 - prefetch data for level 3 cache (e.g., shared cache 105) and higher, or PFA - prefetch into a non-temporal cache structure. IMM represents an immediate field of the instruction that encodes a number of cachelines to prefetch.

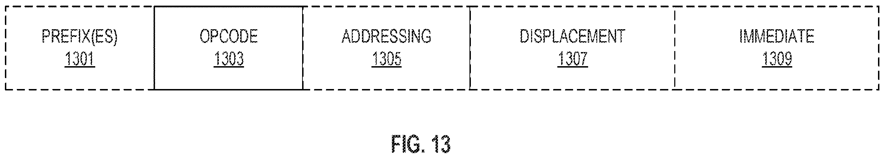

Examples of instruction formats are shown in FIGS. 13-18. In some examples, the opcode of the instruction is found in, for example, field 1303 and any used immediate is found in 1309. In some examples, the type of prefetch to perform is dictated by a prefix. A source is typically indicated using addressing field 1305 such as using aspects of the mod R/M byte 1402 like the register field 1444 to indicate a register as a source, the r/m field 1446 as another source, etc. Note that sources can be registers and/or memory.

In some examples, the fetched instruction of the first instruction set is translated into one or more instructions of a second instruction set at 502.

The fetched instruction, or the one or more translated instructions of the second instruction set, is/are decoded at 503. In some examples, the translation and decoding are merged.

Data values associated with the source operand(s) of the decoded instruction(s) are retrieved and the instruction(s) scheduled at 505. For example, when one or more of the source operands are memory operands, the data from the indicated memory location is retrieved.

At 507, the decoded instruction(s) is/are executed by execution circuitry (hardware) such as that detailed herein according to the opcode, etc. of the fetched instruction.

In some examples, the instruction(s) is/are committed or retired at 509.

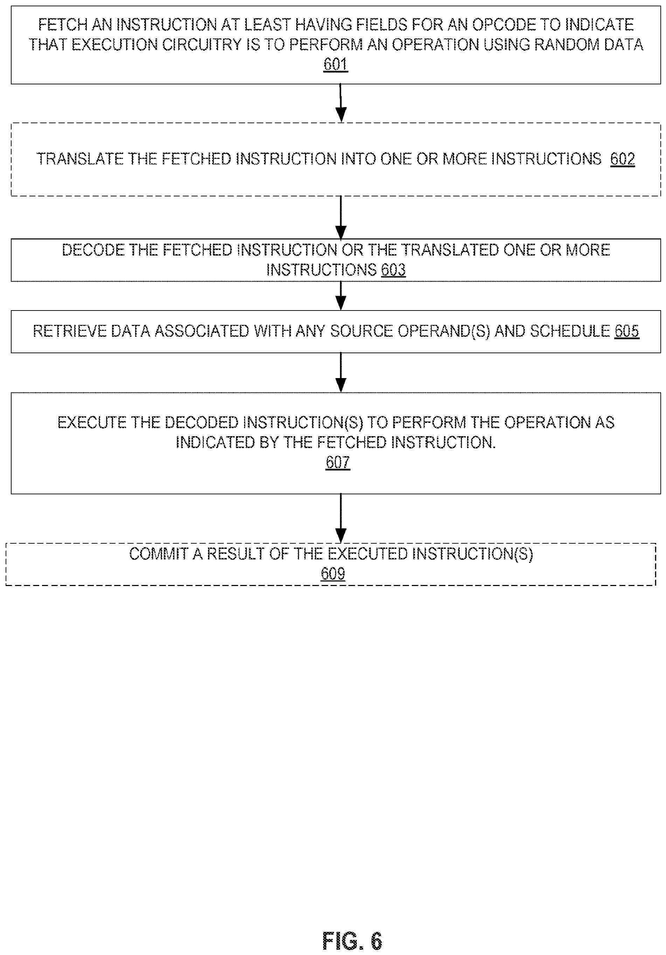

**FIG.** 6 illustrates examples of a method to process a {OP}WRND instruction. In some examples, a processor core as shown in FIG. 10(B), a pipeline as detailed below, etc. performs this method. In other examples, a binary translation layer performs aspects of the method, and a processor core performs other aspects of the method.

At 601, a single {OP}WRND instruction is fetched. The {OP}WRND instruction may come in many different forms depending on the implementation.

An example of a format for a memory initialization instruction is {OP}WRND DEST. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. An implicit source is a random data value that is stored, for example, in random number storage. This may be used for a destructive variant (e.g., DEST = random number OP DEST). The destination and any source may be of integer value (e.g., INT4, INT8, INT16, INT32, etc.), floating point (e.g., FP16, FP32, FP64, BF16, etc.) and may be packed (e.g., a vector register) or scalar.

An example of a format for a memory initialization instruction is {OP}WRND DEST, SRC. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. SRC represents a first source of the instruction. A particular source location (e.g., memory or a register) is indicated using one or more fields of the instruction as detailed later. An implicit second source is a random data value that is stored, for example, in random number storage. The destination and any source may be of integer value (e.g., INT4, INT8, INT16, INT32, etc.), floating point (e.g., FP16, FP32, FP64, BF16, etc.) and may be packed (e.g., a vector register) or scalar. This may be used for a destructive or non-destructive variant

An example of a format for a memory initialization instruction is {OP}WRND DEST, SRC1, SRC2. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. SRC1 and SRC2 represent a first source and second source of the instruction. A particular source location (e.g., memory or a register) is indicated using one or more fields of the instruction as detailed later. An implicit third source is a random data value that is stored, for example, in random number storage. The destination and any source may be of integer value (e.g., INT4, INT8, INT16, INT32, etc.), floating point (e.g., FP16, FP32, FP64, BF16, etc.) and may be packed (e.g., a vector register) or scalar. This may be used for a destructive or non-destructive variant

An example of a format for a memory initialization instruction is {OP}WRND DEST IMM. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. IMM represents an immediate field to encode a value to be used during execution. An implicit source is a random data value that is stored, for example, in random number storage. This may be used for a destructive variant (e.g., DEST = random number OP DEST). The destination and any source may be of integer value (e.g., INT4, INT8, INT16, INT32, etc.), floating point (e.g., FP16, FP32, FP64, BF16, etc.) and may be packed (e.g., a vector register) or scalar.

An example of a format for a memory initialization instruction is {OP}WRND DEST, SRC IMM. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. SRC represents a first source of the instruction. A particular source location (e.g., memory or a register) is indicated using one or more fields of the instruction as detailed later. An implicit second source is a random data value that is stored, for example, in random number storage. IMM represents an immediate field to encode a value to be used during execution. The destination and any source may be of integer value (e.g., INT4, INT8, INT16, INT32, etc.), floating point (e.g., FP16, FP32, FP64, BF16, etc.) and may be packed (e.g., a vector register) or scalar. This may be used for a destructive or non-destructive variant

An example of a format for a memory initialization instruction is {OP}WRND DEST, SRC1, SRC2 IMM. In some examples, {OP}WRND is the opcode mnemonic of the instruction. {OP} would be replaced with the operation to be performed and, in some examples, is the same as an existing instruction (e.g., PMULUDQ for a multiply packed unsigned doubleword integers). Exemplary operations include arithmetic operations (multiply, add, subtract, divide, fused multiply add, fused multiply accumulate, etc.), Boolean operations, etc. DEST represents a destination of the instruction. A particular destination location (e.g., memory or a register) is indicated using one or more fields of the instruction as detailed later. SRC1 and SRC2 represent a first source and second source of the instruction. A particular source location (e.g., memory or a register) is indicated using one or more fields of the instruction as detailed later. An implicit third source is a random data value that is stored, for example, in random number storage. IMM represents an immediate field to encode a value to be used during execution. The destination and any source may be of integer value (e.g., INT4, INT8, INT16, INT32, etc.), floating point (e.g., FP16, FP32, FP64, BF16, etc.) and may be packed (e.g., a vector register) or scalar. This may be used for a destructive or non-destructive variant

Examples of instruction formats are shown in FIGS. 13-18. In some examples, the opcode of the instruction is found in, for example, field 1303 and any used immediate is found in 1309. In some examples, the type of prefetch to perform is dictated by a prefix. A source is typically indicated using addressing field 1305 such as using aspects of the mod R/M byte 1402 like the register field 1444 to indicate a register as a source, the r/m field 1446 as another source, etc. Note that sources can be registers and/or memory.

In some examples, the fetched instruction of the first instruction set is translated into one or more instructions of a second instruction set at 602.

The fetched instruction, or the one or more translated instructions of the second instruction set, is/are decoded at 603. In some examples, the translation and decoding are merged.

Data values associated with the source operand(s) of the decoded instruction(s) are retrieved and the instruction(s) scheduled at 605. For example, when one or more of the source operands are memory operands, the data from the indicated memory location is retrieved.

At 607, the decoded instruction(s) is/are executed by execution circuitry (hardware) such as that detailed herein according to the opcode of the fetched instruction.

In some examples, the instruction(s) is/are committed or retired at 609.

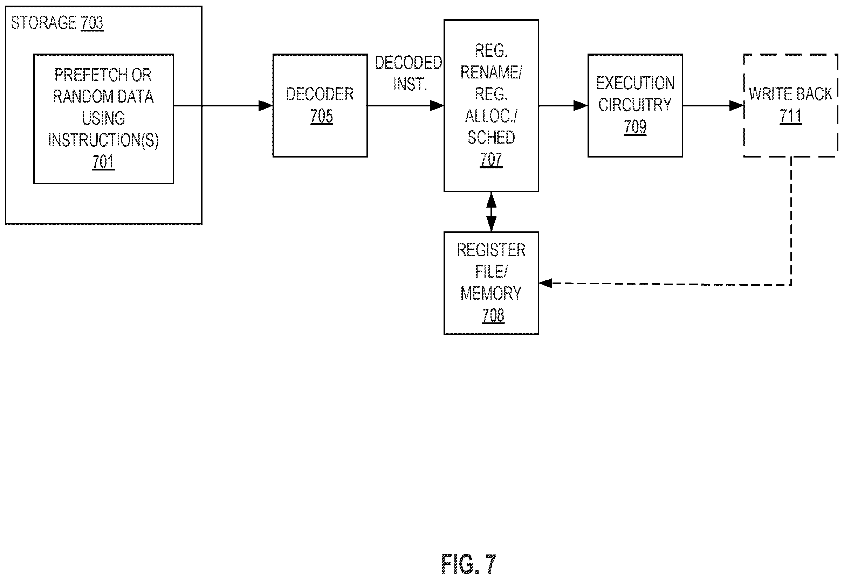

**FIG.** 7 illustrates examples of hardware to process an instruction such as a random data cache prefetch (PREFETCHRDM) instruction and/or a use random data in an operation ({OP}WRND) instruction. In some examples, this hardware represents aspects of a core. As illustrated, storage 703 stores an PREFETCHRDM and/or random data using instruction 701 to be executed.

The instruction 701 is received by decode circuitry 705. For example, the decode circuitry 705 receives this instruction from fetch logic/circuitry. The instruction includes fields for an opcode, first and second sources, and a destination. In some examples, the sources and destination are registers, and in other examples one or more are memory locations. In some examples, the opcode details which arithmetic operation is to be performed.

More detailed examples of at least one instruction format will be detailed later. The decode circuitry 705 decodes the instruction into one or more operations. In some examples, this decoding includes generating a plurality of micro-operations to be performed by execution circuitry (such as execution circuitry 709). The decode circuitry 705 also decodes instruction prefixes.

In some examples, register renaming, register allocation, and/or scheduling circuitry 707 provides functionality for one or more of: 1) renaming logical operand values to physical operand values (e.g., a register alias table in some examples), 2) allocating status bits and flags to the decoded instruction, and 3) scheduling the decoded instruction for execution on execution circuitry out of an instruction pool (e.g., using a reservation station in some examples).

Registers (register file) and/or memory 708 store data as operands of the instruction to be operated on by execution circuitry 709. Exemplary register types include packed data registers, general purpose registers, and floating-point registers.

In some examples, execution circuitry 709 executes the decoded instruction(s) prefetch one or more cachelines with a random data value. In some examples, execution circuitry 709 executes the decoded instruction(s) to perform an operation using implicitly addressed storage of random data. Exemplary detailed execution circuitry is shown in FIGS. 2, 10, etc.

In some examples, retirement/write back circuitry 711 architecturally commits the destination register into the registers or memory 708 and retires the instruction.

Exemplary architectures, pipelines, cores, systems, instruction formats, etc. in which examples described above may be embodied are detailed below.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

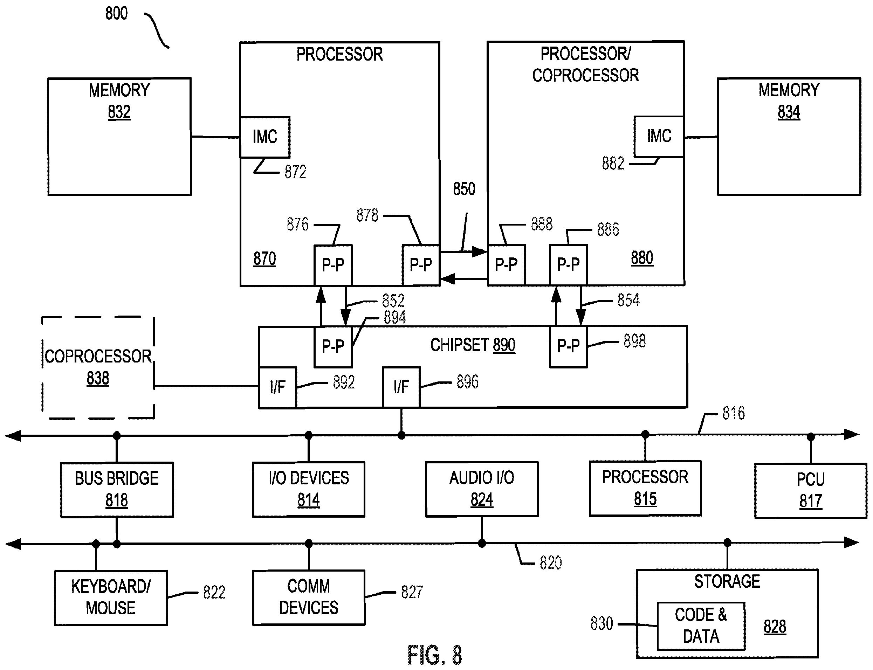

**FIG. 8** illustrates examples of an exemplary system. Multiprocessor system 800 is a point-to-point interconnect system and includes a plurality of processors including a first processor 870 and a second processor 880 coupled via a point-to-point interconnect 850. In some examples, the first processor 870 and the second processor 880 are homogeneous. In some examples, first processor 870 and the second processor 880 are heterogenous.

Processors 870 and 880 are shown including integrated memory controller (IMC) units circuitry 872 and 882, respectively. Processor 870 also includes as part of its interconnect controller units point-to-point (P-P) interfaces 876 and 878; similarly, second processor 880 includes P-P interfaces 886 and 888. Processors 870, 880 may exchange information via the point-to-point (P-P) interconnect 850 using P-P interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a chipset 890 via individual P-P interconnects 852, 854 using point to point interface circuits 876, 894, 886, 898. Chipset 890 may optionally exchange information with a coprocessor 838 via a high-performance interface 892. In some examples, the coprocessor 838 is a special-purpose processor, such as, for example, a high-throughput MIC processor, a network or communication processor, compression engine, graphics processor, GPGPU, embedded processor, or the like.

A shared cache (not shown) may be included in either processor 870, 880 or outside of both processors, yet connected with the processors via P-P interconnect, such that either or both processors' local cache information may be stored in the shared cache if a processor is placed into a low power mode.

Chipset 890 may be coupled to a first interconnect 816 via an interface 896. In some examples, first interconnect 816 may be a Peripheral Component Interconnect (PCI) interconnect, or an interconnect such as a PCI Express interconnect or another I/O interconnect. In some examples, one of the interconnects couples to a power control unit (PCU) 817, which may include circuitry, software, and/or firmware to perform power management operations with regard to the processors 870, 880 and/or co-processor 838. PCU 817 provides control information to a voltage regulator to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interconnect 816, along with an interconnect (bus) bridge 818 which couples first interconnect 816 to a second interconnect 820. In some examples, one or more additional processor(s) 815, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 816. In some examples, second interconnect 820 may be a low pin count (LPC) interconnect. Various devices may be coupled to second interconnect 820 including, for example, a keyboard and/or mouse 822, communication devices 827 and a storage unit circuitry 828. Storage unit circuitry 828 may be a disk drive or other mass storage device which may include instructions/code and data 830, in some examples. Further, an audio I/O 824 may be coupled to second interconnect 820. Note that other architectures than the point-to-point architecture described above are possible. For example, instead of the point-to-point architecture, a system such as multiprocessor system 800 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

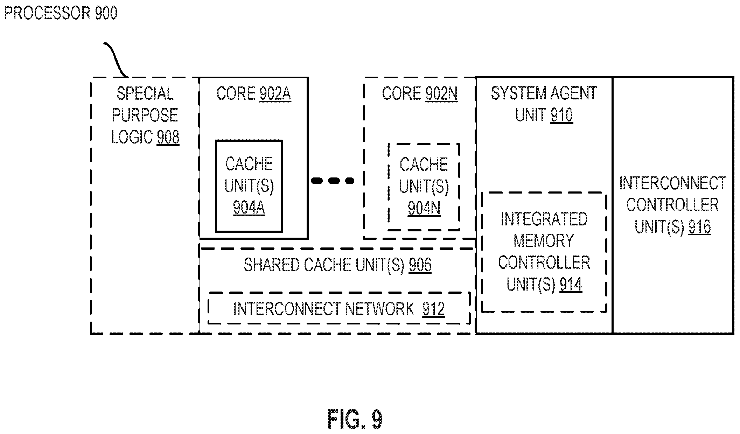

**FIG. 9** illustrates a block diagram of examples of a processor 900 that may have more than one core, may have an integrated memory controller, and may have integrated graphics. The solid lined boxes illustrate a processor 900 with a single core 902A, a system agent 910, a set of one or more interconnect controller units circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interconnect controller units circuitry 916. Note that the processor 900 may be one of the processors 870 or 880, or co-processor 838 or 815 of **FIG. 8****.**

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, BiCMOS, CMOS, or NMOS.

A memory hierarchy includes one or more levels of cache unit(s) circuitry 904(A)-(N) within the cores 902(A)-(N), a set of one or more shared cache units circuitry 906, and external memory (not shown) coupled to the set of integrated memory controller units circuitry 914. The set of one or more shared cache units circuitry 906 may include one or more mid-level caches, such as level 2 (L2), level 3 (L3), level 4 (L4), or other levels of cache, such as a last level cache (LLC), and/or combinations thereof. While in some examples ring-based interconnect network circuitry 912 interconnects the special purpose logic 908 (e.g., integrated graphics logic), the set of shared cache units circuitry 906, and the system agent unit circuitry 910, alternative examples use any number of well-known techniques for interconnecting such units. In some examples, coherency is maintained between one or more of the shared cache units circuitry 906 and cores 902(A)-(N).

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous or heterogeneous in terms of architecture instruction set; that is, two or more of the cores 902(A)-(N) may be capable of executing the same instruction set, while other cores may be capable of executing only a subset of that instruction set or a different instruction set.

### Exemplary Core Architectures

### In-order and out-of-order core block diagram

**FIG. 10(A)** is a block diagram illustrating both an exemplary in-order pipeline and an exemplary register renaming, out-of-order issue/execution pipeline according to examples. **FIG. 10(B)** is a block diagram illustrating both an exemplary example of an in-order architecture core and an exemplary register renaming, out-of-order issue/execution architecture core to be included in a processor according to examples. The solid lined boxes in **FIGS. 10(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 10(A)****,** a processor pipeline 1000 includes a fetch stage 1002, an optional length decode stage 1004, a decode stage 1006, an optional allocation stage 1008, an optional renaming stage 1010, a scheduling (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, during the decode stage 1006, the one or more fetched instructions may be decoded, addresses (e.g., load store unit (LSU) addresses) using forwarded register ports may be generated, and branch forwarding (e.g., immediate offset or an link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 1000 as follows: 1) the instruction fetch 1038 performs the fetch and length decoding stages 1002 and 1004; 2) the decode unit circuitry 1040 performs the decode stage 1006; 3) the rename/allocator unit circuitry 1052 performs the allocation stage 1008 and renaming stage 1010; 4) the scheduler unit(s) circuitry 1056 performs the schedule stage 1012; 5) the physical register file(s) unit(s) circuitry 1058 and the memory unit circuitry 1070 perform the register read/memory read stage 1014; the execution cluster 1060 perform the execute stage 1016; 6) the memory unit circuitry 1070 and the physical register file(s) unit(s) circuitry 1058 perform the write back/memory write stage 1018; 7) various units (unit circuitry) may be involved in the exception handling stage 1022; and 8) the retirement unit circuitry 1054 and the physical register file(s) unit(s) circuitry 1058 perform the commit stage 1024.

**FIG. 10(B)** shows processor core 1090 including front-end unit circuitry 1030 coupled to an execution engine unit circuitry 1050, and both are coupled to a memory unit circuitry 1070. The core 1090 may be a reduced instruction set computing (RISC) core, a complex instruction set computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end unit circuitry 1030 may include branch prediction unit circuitry 1032 coupled to an instruction cache unit circuitry 1034, which is coupled to an instruction translation lookaside buffer (TLB) 1036, which is coupled to instruction fetch unit circuitry 1038, which is coupled to decode unit circuitry 1040. In one example, the instruction cache unit circuitry 1034 is included in the memory unit circuitry 1070 rather than the front-end unit circuitry 1030. The decode unit circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 1040 may further include an address generation unit circuitry (AGU, not shown). In one example, the AGU generates an LSU address using forwarded register ports, and may further perform branch forwarding (e.g., immediate offset branch forwarding, LR register branch forwarding, etc.). The decode unit circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode unit circuitry 1040 or otherwise within the front end unit circuitry 1030). In one example, the decode unit circuitry 1040 includes a micro-operation (micro-op) or operation cache (not shown) to hold/cache decoded operations, micro-tags, or micro-operations generated during the decode or other stages of the processor pipeline 1000. The decode unit circuitry 1040 may be coupled to rename/allocator unit circuitry 1052 in the execution engine unit circuitry 1050.

The execution engine circuitry 1050 includes the rename/allocator unit circuitry 1052 coupled to a retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, arithmetic generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) unit circuitry 1058 includes vector registers unit circuitry, writemask registers unit circuitry, and scalar register unit circuitry. These register units may provide architectural vector registers, vector mask registers, general-purpose registers, etc. The physical register file(s) unit(s) circuitry 1058 is overlapped by the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution units circuitry 1062 and a set of one or more memory access circuitry 1064. The execution units circuitry 1062 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) unit(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AHB) interface (not shown), and address phase and writeback, data phase load, store, and branches.

The set of memory access circuitry 1064 is coupled to the memory unit circuitry 1070, which includes data TLB unit circuitry 1072 coupled to a data cache circuitry 1074 coupled to a level 2 (L2) cache circuitry 1076. In one exemplary example, the memory access units circuitry 1064 may include a load unit circuitry, a store address unit circuit, and a store data unit circuitry, each of which is coupled to the data TLB circuitry 1072 in the memory unit circuitry 1070. The instruction cache circuitry 1034 is further coupled to a level 2 (L2) cache unit circuitry 1076 in the memory unit circuitry 1070. In one example, the instruction cache 1034 and the data cache 1074 are combined into a single instruction and data cache (not shown) in L2 cache unit circuitry 1076, a level 3 (L3) cache unit circuitry (not shown), and/or main memory. The L2 cache unit circuitry 1076 is coupled to one or more other levels of cache and eventually to a main memory.

The core 1090 may support one or more instructions sets (e.g., the x86 instruction set (with some extensions that have been added with newer versions); the MIPS instruction set; the ARM instruction set (with optional additional extensions such as NEON)), including the instruction(s) described herein. In one example, the core 1090 includes logic to support a packed data instruction set extension (e.g., AVX1, AVX2), thereby allowing the operations used by many multimedia applications to be performed using packed data.

### Exemplary Execution Unit(s) Circuitry

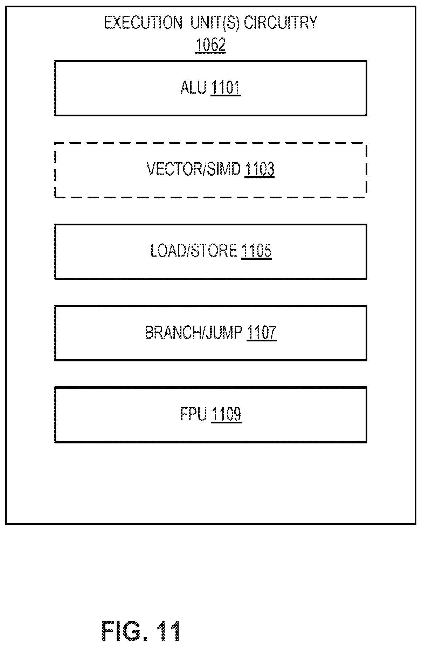

**FIG. 11** illustrates examples of execution unit(s) circuitry, such as execution unit(s) circuitry 1062 of FIG. 10(B). As illustrated, execution unit(s) circuity 1062 may include one or more ALU circuits 1101, vector/SIMD unit circuits 1103, load/store unit circuits 1105, and/or branch/jump unit circuits 1107. ALU circuits 1101 perform integer arithmetic and/or Boolean operations. Vector/SIMD unit circuits 1103 perform vector/SIMD operations on packed data (such as SIMD/vector registers). Load/store unit circuits 1105 execute load and store instructions to load data from memory into registers or store from registers to memory. Load/store unit circuits 1105 may also generate addresses. Branch/jump unit circuits 1107 cause a branch or jump to a memory address depending on the instruction. Floating-point unit (FPU) circuits 1109 perform floating-point arithmetic. The width of the execution unit(s) circuitry 1062 varies depending upon the example and can range from 16-bit to 1,024-bit. In some examples, two or more smaller execution units are logically combined to form a larger execution unit (e.g., two 128-bit execution units are logically combined to form a 256-bit execution unit).

### Exemplary Register Architecture

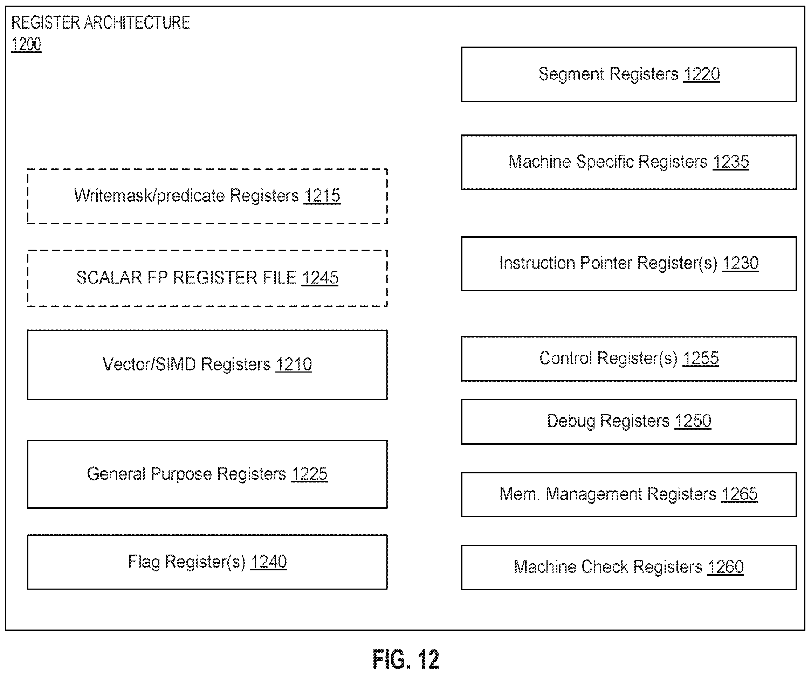

**FIG. 12** is a block diagram of a register architecture 1200 according to some examples. As illustrated, there are vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point register 1245 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory management registers 1265 specify the locations of data structures used in protected mode memory management. These registers may include a GDTR, IDRT, task register, and a LDTR register.

Alternative examples may use wider or narrower registers. Additionally, alternative examples may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Examples of the instruction(s) described herein may be embodied in different formats. Additionally, exemplary systems, architectures, and pipelines are detailed below. Examples of the instruction(s) may be executed on such systems, architectures, and pipelines, but are not limited to those detailed.

**FIG. 13** illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate 1309. Note that some instructions utilize some or all of the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is 1, 2, or 3 bytes in length. In other examples, a primary opcode can be a different length. An additional 3-bit opcode field is sometimes encoded in another field.

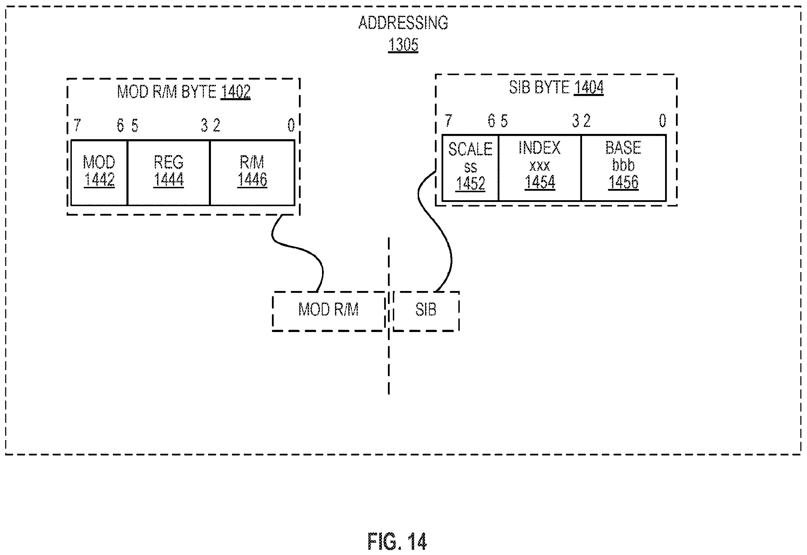

The addressing field 1305 is used to address one or more operands of the instruction, such as a location in memory or one or more registers. **FIG. 14** illustrates examples of the addressing field 1305. In this illustration, an optional ModR/M byte 1402 and an optional Scale, Index, Base (SIB) byte 1404 are shown. The ModR/M byte 1402 and the SIB byte 1404 are used to encode up to two operands of an instruction, each of which is a direct register or effective memory address. Note that each of these fields are optional in that not all instructions include one or more of these fields. The MOD R/M byte 1402 includes a MOD field 1442, a register field 1444, and R/M field 1446.

The content of the MOD field 1442 distinguishes between memory access and non-memory access modes. In some examples, when the MOD field 1442 has a value of b11, a register-direct addressing mode is utilized, and otherwise register-indirect addressing is used.

The register field 1444 may encode either the destination register operand or a source register operand, or may encode an opcode extension and not be used to encode any instruction operand. The content of register index field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address, or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some examples, a displacement field 1307 provides this value. Additionally, in some examples, a displacement factor usage is encoded in the MOD field of the addressing field 1305 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1307.

In some examples, an immediate field 1309 specifies an immediate for the instruction. An immediate may be encoded as a 1-byte value, a 2-byte value, a 4-byte value, etc.

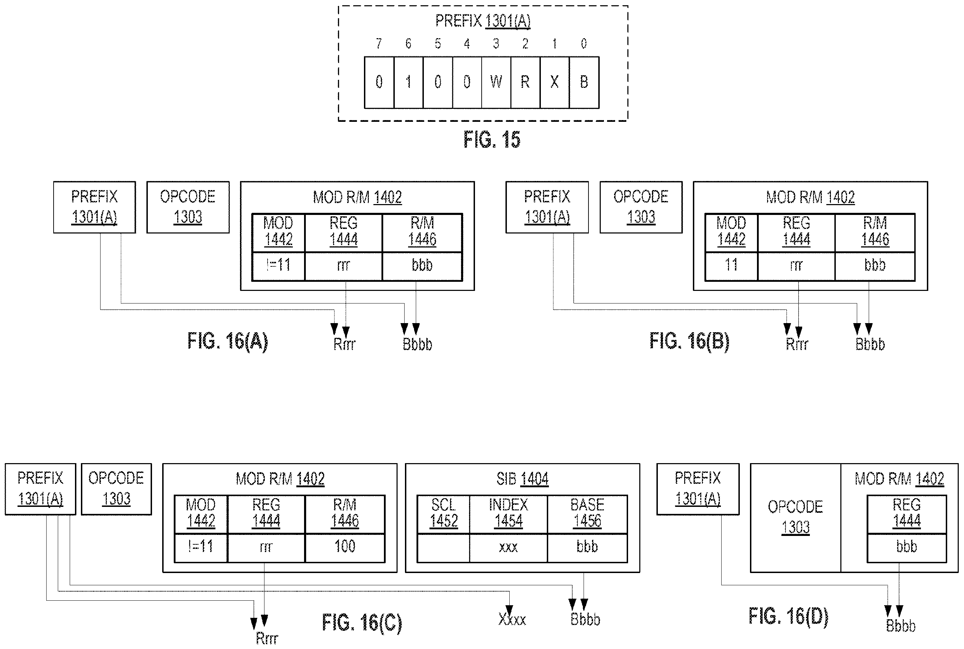

**FIG. 15** illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the Mod R/M byte 1402; 2) using the Mod R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1444 and MOD R/M R/M field 1446 alone can each only address 8 registers.

In the first prefix 1301(A), bit position 2 (R) may an extension of the MOD R/M reg field 1444 and may be used to modify the ModR/M reg field 1444 when that field encodes a general purpose register, a 64-bit packed data register (e.g., a SSE register), or a control or debug register. R is ignored when Mod R/M byte 1402 specifies other registers or defines an extended opcode.

Bit position 1 (X) X bit may modify the SIB byte index field 1454.

Bit position B (B) B may modify the base in the Mod R/M R/M field 1446 or the SIB byte base field 1456; or it may modify the opcode register field used for accessing general purpose registers (e.g., general purpose registers 1225).

**FIGS. 16(A)****-(D)** illustrate examples of how the R, X, and B fields of the first prefix 1301(A) are used. **FIG. 16(A)** illustrates R and B from the first prefix 1301(A) being used to extend the reg field 1444 and R/M field 1446 of the MOD R/M byte 1402 when the SIB byte 1404 is not used for memory addressing. **FIG. 16(B)** illustrates R and B from the first prefix 1301(A) being used to extend the reg field 1444 and R/M field 1446 of the MOD R/M byte 1402 when the SIB byte 1404 is not used (register-register addressing). **FIG. 16(C)** illustrates R, X, and B from the first prefix 1301(A) being used to extend the reg field 1444 of the MOD R/M byte 1402 and the index field 1454 and base field 1456 when the SIB byte 1404 being used for memory addressing. **FIG. 16(D)** illustrates B from the first prefix 1301(A) being used to extend the reg field 1444 of the MOD R/M byte 1402 when a register is encoded in the opcode 1303.

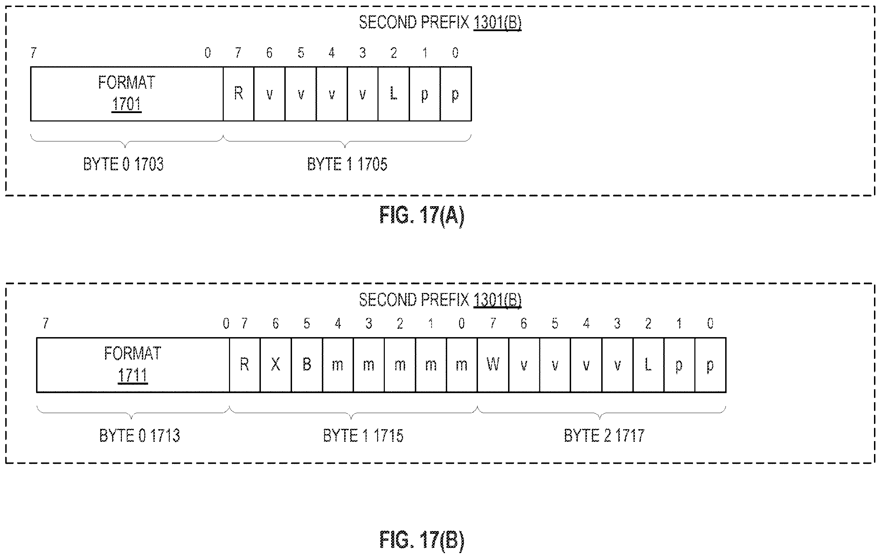

**FIGS. 17(A)****-(B)** illustrate examples of a second prefix 1301(B). In some examples, the second prefix 1301(B) is an example of a VEX prefix. The second prefix 1301(B) encoding allows instructions to have more than two operands, and allows SIMD vector registers (e.g., vector/SIMD registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

**FIG. 17(A)** illustrates examples of a two-byte form of the second prefix 1301(B). In one example, a format field 1701 (byte 0 1703) contains the value C5H. In one example, byte 11705 includes a "R" value in bit[7]. This value is the complement of the same value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1446 to encode the instruction operand that references a memory address or encode either the destination register operand or a source register operand.

Instructions that use this prefix may use the Mod R/M reg field 1444 to encode either the destination register operand or a source register operand, be treated as an opcode extension and not used to encode any instruction operand.

For instruction syntax that support four operands, vvvv, the Mod R/M R/M field 1446 and the Mod R/M reg field 1444 encode three of the four operands. Bits[7:4] of the immediate 1309 are then used to encode the third source register operand.

**FIG. 17(B)** illustrates examples of a three-byte form of the second prefix 1301(B). in one example, a format field 1711 (byte 0 1713) contains the value C4H. Byte 11715 includes in bits[7:5] "R," "X," and "B" which are the complements of the same values of the first prefix 1301(A). Bits[4:0] of byte 11715 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1446 to encode the instruction operand that references a memory address or encode either the destination register operand or a source register operand.

Instructions that use this prefix may use the Mod R/M reg field 1444 to encode either the destination register operand or a source register operand, be treated as an opcode extension and not used to encode any instruction operand.

For instruction syntax that support four operands, vvvv, the Mod R/M R/M field 1446, and the Mod R/M reg field 1444 encode three of the four operands. Bits[7:4] of the immediate 1309 are then used to encode the third source register operand.

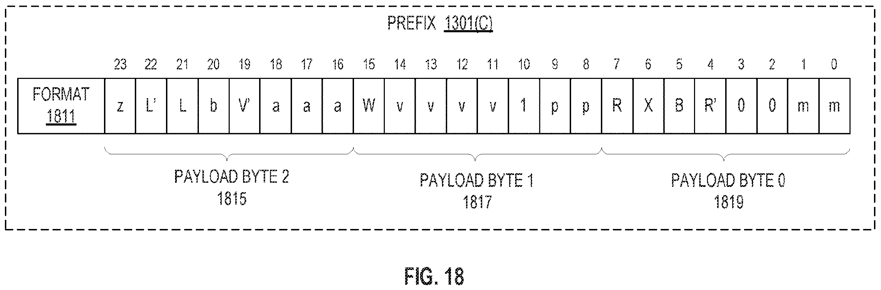

**FIG. 18** illustrates examples of a third prefix 1301(C). In some examples, the first prefix 1301(A) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 12****)** or predication utilize this prefix. Opmask register allow for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mmmmm bits. P[3:2] are reserved in some examples. Bit P[4] (R') allows access to the high 16 vector register set when combined with P[7] and the ModR/M reg field 1444. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1444 and ModR/M R/M field 1446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1301(A) and second prefix 1311(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary examples of encoding of registers in instructions using the third prefix 1301(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

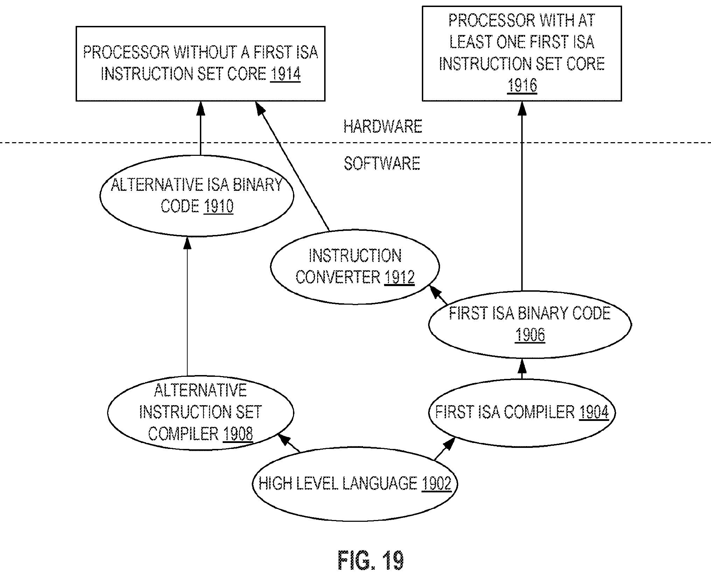

**FIG. 19** illustrates a block diagram contrasting the use of a software instruction converter to convert binary instructions in a source instruction set to binary instructions in a target instruction set according to examples. In the illustrated example, the instruction converter is a software instruction converter, although alternatively the instruction converter may be implemented in software, firmware, hardware, or various combinations thereof. **FIG. 19** shows a program in a high level language 1902 may be compiled using a first ISA compiler 1904 to generate first ISA binary code 1906 that may be natively executed by a processor with at least one first instruction set core 1916. The processor with at least one first ISA instruction set core 1916 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1904 represents a compiler that is operable to generate first ISA binary code 1906 (e.g., object code) that can, with or without additional linkage processing, be executed on the processor with at least one first ISA instruction set core 1916. Similarly, **FIG. 19** shows the program in the high level language 1902 may be compiled using an alternative instruction set compiler 1908 to generate alternative instruction set binary code 1910 that may be natively executed by a processor without a first ISA instruction set core 1914. The instruction converter 1912 is used to convert the first ISA binary code 1906 into code that may be natively executed by the processor without a first ISA instruction set core 1914. This converted code is not likely to be the same as the alternative instruction set binary code 1910 because an instruction converter capable of this is difficult to make; however, the converted code will accomplish the general operation and be made up of instructions from the alternative instruction set. Thus, the instruction converter 1912 represents software, firmware, hardware, or a combination thereof that, through emulation, simulation or any other process, allows a processor or other electronic device that does not have a first ISA instruction set processor or core to execute the first ISA binary code 1906.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given example requires at least one of A, at least one of B, or at least one of C to each be present.

The specification and drawings are, accordingly, to be regarded in an illustrative rather than a restrictive sense. It will, however, be evident that various modifications and changes may be made thereunto without departing from the broader scope of the disclosure as set forth in the claims.

## Claims

1. A method comprising:
Generating and storing (401) random numbers;
translating (502, 602) an instance of a single instruction (701) from a first instruction set architecture to one or more instructions of a second instruction set architecture, the single instruction at least having a field for an opcode, the opcode to indicate execution circuitry is to perform an operation using the random numbers;
decoding (503, 603) the one or more instructions of the second instruction set architecture; and
executing (507, 607) the decoded one or more instructions of the second instruction set architecture according to the opcode of the single instruction;
**characterized in that** the generating and storing occurs during boot and/or during downtime of a processor.

2. The method of claim 1, wherein the instruction includes one or more fields to explicitly reference a source operand.

3. The method of any of claims 1-2, wherein the instruction includes one or more fields to explicitly reference a destination operand.

4. The method of any of claims 1-3, wherein the operation is an arithmetic operation.

5. The method of any of claims 1-4, wherein the operation is a Boolean operation.

6. An apparatus comprising:
A processor (101) comprising;
a random number generator, RNG, circuitry (113) configured to generate and store random numbers;
an instruction converter configured to translate an instance of a single instruction (701) from a first instruction set architecture to one or more instructions of a second instruction set architecture, the single instruction at least having a field for an opcode, the opcode to indicate execution circuitry is to perform an operation using the random numbers;
decode circuitry (705) configured to decode the one or more instructions of the second instruction set architecture; and
execution circuitry (709) configured to execute the decoded one or more instructions of the second instruction set architecture according to the opcode of the single instruction;
**characterized in that** the generating and storing occurs during boot and/or during downtime of the processor (101).

7. A computer program comprising instructions which, when the program is executed by an apparatus according to claim 6, cause said apparatus to carry out the method as claimed in any one of preceding claims 1 to 5.

## Patentansprüche

1. Verfahren, das Folgendes umfasst:
Erzeugen und Speichern (401) von Zufallszahlen;
Übersetzen (502, 602) einer Instanz einer einzelnen Anweisung (701) aus einer ersten Befehlssatzarchitektur in eine oder mehrere Anweisungen einer zweiten Befehlssatzarchitektur, wobei die einzelne Anweisung mindestens ein Feld für einen Opcode aufweist, wobei der Opcode angeben soll, dass die Ausführungsschaltung eine Operation unter Verwendung der Zufallszahlen durchführen soll;
Decodieren (503, 603) der einen oder mehreren Anweisungen der zweiten Befehlssatzarchitektur; und
Ausführen (507, 607) der decodierten einen oder mehreren Anweisungen der zweiten Befehlssatzarchitektur gemäß dem Opcode der einzelnen Anweisung;
**dadurch gekennzeichnet, dass** das Erzeugen und Speichern während des Hochfahrens und/oder während der Ausfallzeit eines Prozessors erfolgt.

2. Verfahren nach Anspruch 1, wobei die Anweisung ein oder mehrere Felder enthält, um explizit auf einen Quelloperanden zu verweisen.

3. Verfahren nach einem der Ansprüche 1-2, wobei die Anweisung ein oder mehrere Felder enthält, um explizit auf einen Zieloperanden zu verweisen.

4. Verfahren nach einem der Ansprüche 1-3, wobei die Operation eine arithmetische Operation ist.

5. Verfahren nach einem der Ansprüche 1-4, wobei die Operation eine Boolesche Operation ist.

6. Vorrichtung, die Folgendes umfasst:
einen Prozessor (101), der Folgendes umfasst:
eine Schaltung (113) für einen Zufallszahlengenerator (RNG), die dafür ausgebildet ist, Zufallszahlen zu erzeugen und zu speichern;
einen Anweisungsumwandler, der ausgebildet ist, um eine Instanz einer einzelnen Anweisung (701) von einer ersten Befehlssatzarchitektur in eine oder mehrere Anweisungen einer zweiten Befehlssatzarchitektur zu übersetzen, wobei die einzelne Anweisung mindestens ein Feld für einen Opcode aufweist, wobei der Opcode angeben soll, dass die Ausführungsschaltung eine Operation unter Verwendung der Zufallszahlen durchführen soll;
eine Decodierschaltung (705), die für das Decodieren der einen oder mehreren Anweisungen der zweiten Befehlssatzarchitektur ausgebildet ist; und
eine Ausführungsschaltung (709), die dafür ausgebildet ist, die decodierte(n) Anweisung(en) der zweiten Befehlssatzarchitektur gemäß dem Opcode der einzelnen Anweisung auszuführen;
**dadurch gekennzeichnet, dass** das Erzeugen und Speichern während des Hochfahrens und/oder während der Ausfallzeit des Prozessors (101) erfolgt.

7. Computerprogramm, das Anweisungen umfasst, die, wenn das Programm von einer Vorrichtung nach Anspruch 6 ausgeführt wird, die Vorrichtung veranlassen, das in einem der vorhergehenden Ansprüche 1 bis 5 beanspruchte Verfahren auszuführen.

## Revendications

1. Procédé comprenant les étapes suivantes :
générer et stocker (401) des nombres aléatoires ;
traduire (502, 602) une instance d'une instruction unique (701) d'une première architecture de jeu d'instructions en une ou plusieurs instructions d'une deuxième architecture de jeu d'instructions, l'instruction unique ayant au moins un champ pour un opcode, l'opcode indiquant que les circuits d'exécution doivent effectuer une opération à l'aide des nombres aléatoires ;
décoder (503, 603) les une ou plusieurs instructions de la deuxième architecture de jeu d'instructions ; et
exécuter (507, 607) les une ou plusieurs instructions décodées de la deuxième architecture de jeu d'instructions conformément à l'opcode de l'instruction unique ;
**caractérisé en ce que** la génération et le stockage ont lieu pendant le démarrage et/ou pendant le temps d'arrêt d'un processeur.

2. Procédé selon la revendication 1, dans lequel l'instruction comprend un ou plusieurs champs pour référencer de manière explicite un opérande source.

3. Procédé selon la revendication 1 ou la revendication 2, dans lequel l'instruction comprend un ou plusieurs champs pour référencer de manière explicite un opérande de destination.

4. Procédé selon l'une quelconque des revendications 1 à 3, dans lequel l'opération est une opération arithmétique.

5. Procédé selon l'une quelconque des revendications 1 à 4, dans lequel l'opération est une opération booléenne.

6. Appareil comprenant :
un processeur (101) comprenant :
des circuits de générateur de nombres aléatoires, RNG, (113) configurés pour générer et stocker des nombres aléatoires ;
un convertisseur d'instructions configuré pour traduire une instance d'une instruction unique (701) d'une première architecture de jeu d'instructions en une ou plusieurs instructions d'une deuxième architecture de jeu d'instructions, l'instruction unique ayant au moins un champ pour un opcode, l'opcode indiquant que les circuits d'exécution doivent effectuer une opération à l'aide des nombres aléatoires ;
des circuits de décodage (705) configurés pour décoder les une ou plusieurs instructions de la deuxième architecture de jeu d'instructions ; et
des circuits d'exécution (709) configurés pour exécuter les une ou plusieurs instructions décodées de la deuxième architecture de jeu d'instructions en fonction de l'opcode de l'instruction unique ;
**caractérisé en ce que** la génération et le stockage ont lieu pendant le démarrage et/ou pendant le temps d'arrêt du processeur (101).

7. Programme d'ordinateur comprenant des instructions qui, lorsque le programme est exécuté par un appareil selon la revendication 6, amènent ledit appareil à mettre en œuvre le procédé tel que revendiqué dans l'une quelconque des revendications précédentes 1 à 5.
